# EUROPEAN PATENT APPLICATION

(11) **EP 4 332 183 A1**
(43) Date of publication of application: **06.03.2024**
(21) Application number: 22795585.3
(22) Date of filing: 13.04.2022
(51) Int. Cl.: C09D 11/18, B43K 1/08

(54) **OIL-BASED BALLPOINT PEN**

(30) Priority: 28.04.2021 JP 2021076180
(71) Applicant: Kabushiki Kaisha Pilot Corporation (also trading as Pilot Corporation), Tokyo 104-8304 (JP)
(72) Inventor: MASUDA, Hirotaka, Tokyo 104-8304 (JP)
(74) Representative: Hoffmann Eitle
(86) International application number: PCT/JP2022/017708
(87) International publication number: WO 2022/230671

(57) **Abstract**

An oil-based ballpoint pen (100) includes: a ballpoint pen tip (4) at a tip part of an ink storage cylinder (2), and an oil-based ballpoint pen ink composition (10) stored in the ink storage cylinder (2), the oil-based ballpoint pen ink composition (10) containing a colorant, an organic solvent having a boiling point of 140°C or lower, and a resin, wherein the oil-based ballpoint pen ink composition (1) has an ink viscosity of 300 mPa·s or less at 20°C and a shear rate of 200 sec⁻¹, an ink consumption of the oil-based ballpoint pen (100) per a writing distance of 100 m is 80 mg or more, and a ratio of a ball diameter B (mm) to an ink consumption A (mg) per a writing distance of 100 m satisfies 100 < A/B < 600.

## Description

### TECHNICAL FIELD

The present invention relates to an oil-based ballpoint pen.

### BACKGROUND ART

As a writing tool capable of writing on a permeation surface such as a paper surface, a ballpoint pen including a ballpoint pen tip rotatably holding a ball at a tip part of an ink cylinder is known.

In addition, as a writing tool capable of writing on a non-permeable surface such as a plastic material or a kraft tape, a marking pen in which a writing end part is formed of a fiber bundle is generally known. Marking pens are widely used for writing on a non-permeable surface. However, these marking pens have various problems and there is room for improvement.

Since the writing end part of the marking pen is formed of a fiber bundle, the marking pen is very easily broken and deformed. When the writing end part is formed of a fiber bundle, the contact with the writing surface is surface contact, so that bold writing can be performed. In writing on the non-permeable surface, since it does not depend on the rotation of the ball like a general ballpoint pen, the ink can be sufficiently applied according to the movement of the writing end part. However, the tip part of a fiber bundle is easily damaged or deformed by writing, and a constant writing width cannot be guaranteed for long-term use. In particular, in the case of writing on a non-permeable surface such as a plastic material or a kraft tape, the writing end part formed of a fiber bundle is easily deformed (see, for example, Patent Documents 1 and 2) .

In order to solve such a problem of the marking pen, various attempts have been made to form the writing end part by using a ballpoint pen tip made of a metal or a resin material such as a ballpoint pen instead of using a fiber bundle. However, merely changing the writing end part from the marking pen structure to the ballpoint pen structure and using the ballpoint pen tip as a metal or resin material as in the conventional oil-based ballpoint pen (see, for example, Patent Document 3) causes a problem that cannot be completely solved on a non-permeable surface represented by a plastic material, a kraft tape, or the like.

In a ballpoint pen ink in which the ink consumption per 200 m is set to 32 mg to 47 mg (16 to 23.5 mg per 100 m), writing is possible on paper, but the density of handwriting is not sufficient by itself. Furthermore, in a case where writing is performed on a non-permeable surface (plastic surface or the like), the ink does not adhere to the non-permeable surface, which is not sufficient, and various problems occur (see, for example, Patent Document 4).

Furthermore, in a case where the ink consumption is increased, writing properties such as handwriting drying characteristics, excessive ink adhesion, and bleeding are easily affected. In addition, when the tip part is left in the atmosphere, the solvent and the like in the ink evaporate, and the colorant, the resin, and the like are dried and solidified, so that handwriting blurring is likely to occur at the time of writing (writing performance). In particular, in the case of a retractable ballpoint pen such as a click-action ballpoint pen or a rotatably extended ballpoint pen, the writing performance is easily affected, and there is also a new problem.

### CITATION LIST

### Patent Literature

Patent Document 1: JP 2006-056946 A
Patent Document 2: JP 2003-176438 A
Patent Document 3: JP H10-95948 A
Patent Document 4: JP 2011-153199 A

### SUMMARY OF INVENTION

### PROBLEMS TO BE SOLVED BY THE INVENTION

In view of such problems, the present invention has made it possible to solve the above problems by earnestly studying an ink consumption (ballpoint pen specification) and ink physical properties/ink components (ink specification) as an oil-based ballpoint pen specification.

An object of the present invention is to provide an oil-based ballpoint pen capable of writing on not only a paper surface but also a non-permeable surface while maintaining a dense handwriting, and having good writing properties.

### MEANS FOR SOLVING PROBLEM

Tin order to solve the above problem, the present invention is
1. An oil-based ballpoint pen including: a ballpoint pen tip at a tip part of an ink storage cylinder; and an oil-based ballpoint pen ink composition stored in the ink storage cylinder, the composition containing a colorant, an organic solvent having a boiling point of 140°C or lower, a resin and a surfactant, wherein the oil-based ballpoint pen ink composition has an ink viscosity of 300 mPa·s or less at 20°C and a shear rate of 200 sec⁻¹, an ink consumption of the oil-based ballpoint pen per a writing distance of 100 m is 80 mg or more, and a ratio of a ball diameter B (mm) to an ink consumption A (mg) per a writing distance of 100 m satisfies 100 < A/B < 600.
2. The oil-based ballpoint pen according to item 1, wherein the surfactant includes one kind or two or more kinds of surfactants selected from a phosphate ester-based surfactant, a silicone-based surfactant, a surfactant having an acetylene bond, a fluorine-based surfactant, a fatty acid, and a fatty acid ester.
3. The oil-based ballpoint pen according to item 1 or 2, wherein the resin includes at least one kind of resin selected from a terpene phenol resin, a rosin resin, a styrene-maleic acid resin, a styrene-acrylic resin, and an acrylic resin.
4. The oil-based ballpoint pen according to item 1 or 2, wherein the surfactant has an HLB value of 12 or less.
5. The oil-based ballpoint pen according to item 1, wherein the oil-based ballpoint pen ink composition further contains an organic solvent having a boiling point of 160°C or higher.
6. The oil-based ballpoint pen according to item 1, wherein the oil-based ballpoint pen ink composition further contains silica.
7. The oil-based ballpoint pen according to item 6, wherein the silica has a specific surface area of 30 m²/g or more and 300 m²/g or less.
8. The oil-based ballpoint pen according to item 1, wherein a movement amount of a ball of the ballpoint pen tip in an extending direction of the ink storage cylinder is 10 µm or more and 50 µm or less.

### EFFECT OF THE INVENTION

It is possible to provide an oil-based ballpoint pen capable of writing not only on the paper surface but also on the non-permeable surface while increasing the ink consumption and maintaining a dense handwriting, and having good writing properties such as handwriting blurring, excessive ink adhesion, bleeding, and dryness.

### BRIEF DESCRIPTION OF DRAWINGS

FIG. 1 is a cross-sectional view of an example of a ballpoint pen; and
FIG. 2 is an enlarged cross-sectional view of an example of a ballpoint pen tip.

### DESCRIPTION OF EMBODIMENTS

The oil-based ballpoint pen of the present invention is an oil-based ballpoint pen including a ballpoint pen tip at the tip part of an ink storage cylinder, and an oil-based ballpoint pen ink composition containing a colorant, an organic solvent having a boiling point of 140°C or lower, a resin, and a surfactant in the ink storage cylinder. In addition, it is characterized in that the oil-based ballpoint pen ink composition has an ink viscosity of 300 mPa·s or less at 20°C and a shear rate of 200 sec⁻¹, an ink consumption of the oil-based ballpoint pen per a writing distance of 100 m is 80 mg or more, and a ratio of a ball diameter B (mm) to an ink consumption A (mg) per a writing distance of 100 m satisfies 100 < A/B < 600.

In the present invention, the oil-based ballpoint pen ink composition has an ink viscosity of 300 mPa·s or less at 20°C and a shear rate of 200 sec⁻¹, and the ink consumption per a writing distance of 100 m of the oil-based ballpoint pen is 80 mg or more. Therefore, writing can be performed not only on the paper surface but also on the non-permeable surface while maintaining a dense handwriting. Further, a ratio of a ball diameter B (mm) to an ink consumption A (mg) per a writing distance of 100 m satisfies 100 < A/B < 600, and the ink oil-based ballpoint pen composition contains an organic solvent having a boiling point of 140°C or lower. Therefore, it is possible to improve writing properties such as handwriting blurring, excessive ink adhesion, bleeding, and dryness. Therefore, the oil-based ballpoint pen of the present invention can be used to write not only on the paper surface but also on the non-permeable surface while maintaining a dense handwriting, and can have good writing properties such as handwriting blurring, excessive ink adhesion, bleeding, and dryness.

### (Ink viscosity)

The oil-based ballpoint pen ink composition of the present invention has an ink viscosity of 300 mPa·s or less at 20°C and a shear rate of 100 sec⁻¹ (at the time of writing). Since the oil-based ballpoint pen ink composition has an ink viscosity of 300 mPa·s or less, it is possible to provide a dense handwriting and write even on a non-permeable surface, and the handwriting blurring can be improved.

The ink viscosity of the oil-based ballpoint pen ink composition is preferably 200 mPa·s or less in consideration of a denser handwriting and good writing properties on a non-permeable surface, and is preferably 100 mPa·s or less and preferably 50 mPa·s or less in consideration of writing properties on a non-permeable surface. The ink viscosity of the oil-based ballpoint pen ink composition is preferably 5 mPa·s or more in consideration of writing properties such as excessive ink adhesion, bleeding, and handwriting drying characteristics, and more preferably 8 mPa·s or more in more consideration. The ink viscosity of the oil-based ballpoint pen ink composition is measured at 20°C using a viscometer RVDVII + Pro CP-42 spindle manufactured by Brookfield.

### (Ink consumption)

The ink consumption per a writing distance of 100 m of the oil-based ballpoint pen of the present invention is 80 mg or more. When the ink consumption per a writing distance of 100 m is 80 mg or more, the ink consumption increases, it is possible to provide a dense handwriting and write even on a non-permeable surface, there is no handwriting blurring, and a good writing feel is obtained. In more consideration, the ink consumption per 100 m of the oil-based ballpoint pen is preferably 100 mg or more, and more preferably 110 mg or more. Considering that it is possible to provide a denser handwriting and write even on a non-permeable surface, and the handwriting blurring is suppressed, the ink consumption per a writing distance of 100 m of the oil-based ballpoint pen is preferably 130 mg or more.

The ink consumption is preferably 300 mg or less. This is because when the ink consumption exceeds 300 mg, it is likely to affect the ink leakage suppression from the gap between the ball and the tip of the tip, and excessive ink adhesion, bleeding, and handwriting drying characteristics are also easily occurred. In more consideration, the ink consumption is preferably 250 mg or less. Considering the balance of the above effects, the ink consumption is preferably 100 mg or more and 250 mg or less. The ink consumption is preferably 110 mg or more and 250 mg or less in consideration of achieving all of a denser handwriting, a writing properties on a non-permeable surface, and an improvement in writing properties such as handwriting blurring and excessive ink adhesion, and is preferably 130 mg or more and 250 mg or less in more consideration.

In the ink consumption, the spiral writing test is performed using five test samples at a writing speed of 4 m/min under the conditions of 20°C, a writing angle of 65° on a writing paper JIS P3201 writing paper, and a writing load of 100 g. The average value of the ink consumption per a writing distance of 100 m in the spiral writing test is defined as the ink consumption per a writing distance of 100 m.

In the present invention, it is not sufficient to increase the ink consumption in order to enable writing on the non-permeable surface while achieving a dense handwriting, and to improve all of the writing properties such as ink leakage suppression, writing feel, handwriting blurring, strike-through, excessive ink adhesion, bleeding, and dryness. Therefore, it is necessary to examine the relationship between the ink consumption A (mg) of the ballpoint pen and the ball diameter B (mm).

The oil-based ballpoint pen of the present invention satisfies the relationship of 100 < A/B < 600, where A (mg) is an ink consumption per a writing distance of 100 m, and B (mm) is a ball diameter. In the oil-based ballpoint pen of the present invention, since A/B satisfies the above relationship, it is possible to write not only on the paper surface but also on the non-permeable surface while maintaining a dense handwriting, and to improve the writing properties such as ink leakage suppression, handwriting blurring, strike-through, excessive ink adhesion, bleeding, and dryness.

Regarding the relationship of 100 < A/B < 600 in the present invention, when A/B < 100, the ink consumption is not sufficient with respect to the ball diameter, and a dense handwriting cannot be obtained. In addition, when A/B < 100, in a case where writing is performed on the non-permeable surface, handwriting blurring or repelling occurs, and a good writing feel cannot be obtained. When A/B > 600, strike-through, excessive ink adhesion, and bleeding occur, and the handwriting drying characteristics is poor, and ink leakage from the gap between the ball and the tip of the tip is more likely to occur.

Considering that a denser handwriting, writing properties on the non-permeable surface (handwriting blurring, excessive ink adhesion, bleeding, and dryness), and writing feel are improved, a relationship of 120 ≤ A/B < 600 is preferably satisfied. In order to make the above effect well-balanced, 155 ≤ A/B < 600 is preferable. In consideration of the writing properties on the non-permeable surface (handwriting blurring, excessive ink adhesion, bleeding, and dryness), 180 ≤ A/B ≤ 550 is preferable, 250 ≤ A/B ≤ 520 is preferable, and 300 ≤ A/B ≤ 500 is preferable.

The ball diameter is not particularly limited, but is preferably about 0.1 mm or more and 2.0 mm or less, and preferably in a range of 0.3 mm or more and 1.6 mm or less.

### (Organic solvent)

The oil-based ballpoint pen ink composition of the oil-based ballpoint pen of the present invention contains an organic solvent having a boiling point of 140°C or lower. Since the oil-based ballpoint pen ink composition contains an organic solvent having a boiling point of 140°C or lower, when writing on a non-permeable surface, the handwriting drying characteristics is improved, and the ink component can be dissolved and stabilized. In addition, the tip part of the ballpoint pen tip can be easily dried, and ink leakage from the gap between the ball and the tip can be easily suppressed. In more consideration, the oil-based ballpoint pen ink composition preferably contains an organic solvent having a boiling point of 120°C or lower. Furthermore, it is preferable to contain an alcohol solvent having a boiling point of 140°C or lower in consideration of dissolution stability with a colorant, a surfactant, and a resin, and further handwriting drying characteristics. In consideration of the above effect, a lower alcohol (5 or less carbon atoms in the molecule) is preferable, and a lower alcohol having 3 or less carbon atoms in the molecule is preferable.

Examples of the organic solvent having a boiling point of 140°C or lower include organic solvents such as alcohol solvents, glycol ether solvents, glycol solvents, and hydrocarbon solvents. Specific examples thereof include methanol, ethanol, 1-propanol, isopropanol, isobutanol, butanol, cyclohexane, methylcyclohexane, ethylcyclohexane, cyclopentane, n-heptane, isooctane, n-octane, isohexane, n-hexane, propylene glycol monomethyl ether, propylene glycol monoethyl ether, and acetone.

The content of the alcohol solvent is preferably 50 mass% or more, more preferably 70 mass% or more in more consideration, and more preferably 90 mass% or more with respect to the content of all organic solvents in the oil-based ballpoint pen ink composition in order to easily obtain the above effect.

The organic solvent preferably contains an organic solvent having a boiling point of 160°C or higher. This is because it is difficult to volatilize since the boiling point is high, and it is easy to improve the writing performance at the tip of the ballpoint pen tip and to suppress whitening of the handwriting.

Therefore, the oil-based ballpoint pen ink composition of the oil-based ballpoint pen of the present invention preferably contains different kinds of organic solvents. In consideration of suppression of whitening of the handwriting, the boiling point difference between different types of organic solvents is preferably 20°C or higher, and in more consideration, the boiling point difference is preferably 50°C or higher, and preferably 80°C or higher.

In particular, when an alcohol solvent having a boiling point of 140°C or lower is used as a main agent, the handwriting may be whitened due to rapid drying of the handwriting. Therefore, the use of an organic solvent having a boiling point of 160°C or higher is effective from the viewpoint of easily suppressing rapid drying and suppressing whitening of the handwriting. In more consideration, an organic solvent having a boiling point of 170°C or higher is preferable, and an organic solvent having a boiling point of 200°C or higher is preferable. Furthermore, among the organic solvents, a glycol solvent is preferable.

In order to achieve the handwriting drying characteristics on the non-permeable surface, the ink leakage suppression, the writing performance, and the suppression of the handwriting whitening in a well-balanced manner, it is preferable to use an alcohol solvent having a boiling point of 140°C or lower and an organic solvent having a boiling point of 160°C or higher in combination.

Examples of the organic solvent having a boiling point of 160°C or lower include organic solvents such as alcohol solvents, glycol ether solvents, and glycol solvents.

The content of the organic solvent having a boiling point of 160°C or higher is preferably less than 20 mass% with respect to the content of the total organic solvent in the oil-based ballpoint pen ink composition in order to easily obtain the above-mentioned effects. In more consideration, the content of the organic solvent having a boiling point of 160°C or higher is preferably less than 10 mass%, and preferably less than 5 mass%.

As the organic solvent, an alcohol solvent having a boiling point of 140°C or lower and an organic solvent having a boiling point of 160°C or higher are preferably used in combination. In addition, it is preferable to use a lower alcohol (5 or less carbon atoms in the molecule) and an organic solvent having a boiling point of 200°C or higher in combination. By using organic solvents having these boiling points in combination, it is possible to achieve the handwriting drying characteristics on the non-permeable surface, ink leakage suppression, writing performance, and suppression of handwriting whitening in a well-balanced manner.

The content of the organic solvent is preferably 10.0 mass% or more and 90.0 mass% or less, and more preferably 20.0 mass% or more and 90.0 mass% or less with respect to the total amount of the oil-based ballpoint pen ink composition in consideration of improving solubility, handwriting drying characteristics, writing performance, and the like. More preferably, the content of the organic solvent is 40.0 mass% or more and 70.0 mass% or less with respect to the total amount of the oil-based ballpoint pen ink composition.

### (Colorant)

The oil-based ballpoint pen ink composition of the present invention contains a colorant. The colorant used in the present invention is not particularly limited, and dye, pigment, and the like can be appropriately selected and used. Dye and pigment may be used in combination.

When the oil-based ballpoint pen ink composition has an ink viscosity of 300 mPa·s or less and a low viscosity as in the present invention, it is preferable to use dye. This is because when a pigment is used, it is necessary to consider the influence of pigment dispersibility.

Examples of the dye include an oil-soluble dye, an acid dye, a basic dye, a gold-containing dye, and a nigrosine dye, and various kinds of salt forming dyes thereof include a salt forming dye of an acid dye and a basic dye, a salt forming dye of an organic acid and a basic dye, and a salt forming dye of an acid dye and an organic amine. These dyes may be used alone or in combination of two or more kind thereof.

Among them, considering that a dense handwriting is obtained, it is preferable to select from a gold-containing dye, a nigrosine dye, and a salt forming dye. Furthermore, in consideration of the influence of environment and safety, the dye is preferably selected from a nigrosine dye and a salt forming dye which do not contain a metal such as chromium or copper in the dye, and in consideration of a denser handwriting, the nigrosine dye is preferable.

Specifically, Examples of the dyes include VALIFAST BLACK 1802, VALIFAST BLACK 1805, VALIFAST BLACK 1807, VALIFAST VIOLET 1701, VALIFAST VIOLET 1704, VALIFAST VIOLET 1705, VALIFAST BLUE 1601, VALIFAST BLUE 1605, VALIFAST BLUE 1613, VALIFAST BLUE 1621, VALIFAST BLUE 1631, VALIFAST RED 1320, VALIFAST RED 1355, VALIFAST RED 1360, VALIFAST YELLOW 1101, VALIFAST YELLOW 1151, nigrosin-based EXBP, nigrosin-based EX, BASE OF BASIC DYES ROB-B, BASE OF BASIC DYES RO6G-B, BASE OF BASIC DYES VPB-B, BASE OF BASIC DYES VB-B, BASE OF BASIC DYES MVB-3 (manufactured by ORIENT CHEMICAL INDUSTRIES CO., LTD.), Aizen Spilon Black GMH-Special, Aizen Spilon Violet C-RH, Aizen Spilon Blue GNH, Aizen Spilon Blue 2BNH, Aizen Spilon Blue C-RH, Aizen Spilon Red C-GH, Aizen Spilon Red C-BH, Aizen Spilon Yellow C-GNH, Aizen Spilon Yellow C-2GH, S.P.T. Blue 111, S.P.T. Blue GLSH-Special, S.P.T. Red 533, S.P.T. Orange 6, S.B.N. Violet 510, S.B.N. Yellow 530, and S.R.C-BH (manufactured by Hodogaya Chemical Co., Ltd.).

Examples of the pigment include inorganic, organic, and processing pigments, and specific examples thereof include carbon black, aniline black, ultramarine, chrome yellow, titanium oxide, iron oxide, phthalocyanine, azo, quinacridone, diketopyrrolopyrrole, quinophthalone, selenium, triphenylmethane, perinone, perylene, dioxazine, and metallic pigments, pearl pigments, fluorescent pigments, and phosphorescent pigments.

The content of the colorant is preferably 3.0 mass% or more and 30.0 mass% or less with respect to the total amount of the oil-based ballpoint pen ink composition. This is because when the content is less than 3.0 mass%, it tends to be difficult to obtain a dense handwriting, and when the content is more than 30.0 mass%, it tends to affect the solubility in the ink. The content of the colorant is preferably 5.0 mass% or more and 25.0 mass% or less in consideration of the tendency, and is 5.0 mass% or more and 20.0 mass% or less in further consideration.

### (Resin)

The oil-based ballpoint pen ink composition for an oil-based ballpoint pen of the present invention contains an ink viscosity modifier and a resin for improving adhesion (writing properties) to a non-permeable surface. Examples of the resin include ketone resins, amide resins, rosin resins such as rosin-modified resins and rosin-modified phenol resins, terpene phenol resins, alkylphenol resins, polyvinyl butyral resins, styrene-maleic acid resins, ethylene-maleic acid resins, styrene-acrylic resins, acrylic resins, maleic acid resins, cellulose resins, petroleum resins, coumarone-indene resins, polyethylene oxide, polymethacrylic acid esters, ketone-formaldehyde resins, and α- and β-pinene-phenol polycondensation resins. These may be used alone or in combination of two or more kinds.

Among these resins, at least one kind selected from a terpene phenol resin, a rosin resin, a styrene-maleic acid resin, a styrene-acrylic resin, and an acrylic resin is preferable in consideration of adhesion (writing properties) of the ink to the non-permeable surface and the ink leakage suppression. In more consideration, the resin contained in the oil-based ballpoint pen ink composition is preferably a terpene phenol resin or a styrene-acrylic resin.

With regard to the terpene phenol resin, the hydroxyl value of the terpene phenol resin is preferably 300 mgKOH/g or less in consideration of the adhesion (writing properties) of the ink to the non-permeable surface and the dissolution stability in the ink. In more consideration, the hydroxyl value is preferably 30 mgKOH/g or more and 300 mgKOH/g or less, preferably 80 mgKOH/g or more and 250 mgKOH/g or less, preferably 100 mgKOH/g or more and 200 mgKOH/g or less, and preferably 100 mgKOH/g or more and 170 mgKOH/g or less. Here, the "hydroxyl value" means the number of milligrams (mg) of potassium hydroxide equivalent to the hydroxyl group in 1 g of the sample.

The softening point of the terpene phenol resin is preferably 100°C or higher and 160°C or lower in consideration of the adhesion of the ink to the non-permeable surface and the dissolution stability in the ink. The softening point is preferably 110°C or higher and 150°C or lower in more consideration. Here, the softening point of the terpene phenol resin (C) is a value measured in accordance with JIS K2207.

In addition, regarding the styrene-maleic acid resin, the styrene-acrylic resin, and the acrylic resin, the acid value is preferably 300 mgKOH/g or more in consideration of the adhesion of the ink to the non-permeable surface, the dissolution stability in the ink, and the handwriting drying characteristics. In more consideration, the acid value is preferably 50 mgKOH/g or more and 300 mgKOH/g or less, and more preferably 100 mgKOH/g or more and 250 mgKOH/g or less.

The styrene-maleic acid resin, the styrene-acrylic resin, and the acrylic resin preferably have a mass average molecular weight of 30,000 or less in consideration of adhesion of the ink to the non-permeable surface and dissolution stability in the ink. In more consideration, the mass average molecular weight of these resins is preferably 20,000 or less, more preferably 5000 or more in more consideration of the adhesion of the ink to the non-permeable surface, and more preferably 8000 or more in more consideration.

The acid value of the resin means the number of mg of potassium hydroxide required to neutralize 1 g of the resin. The mass average molecular weight can be determined by GPC.

Specific examples of these resins include YS POLYSTER U, T, G, S, N, K, and TH series (manufactured by YASUHARA CHEMICAL CO., LTD.), and TAMANOL series (manufactured by ARAKAWA CHEMICAL INDUSTRIES, LTD.).

When the total content of the resin is less than 3% by mass with respect to the total amount of the oil-based ballpoint pen ink composition, it is difficult to obtain sufficient effects for obtaining the effect of adhesion to the non-permeable surface (writing properties) and ink leakage suppression. In addition, when the total content of the resin with respect to the total amount of the oil-based ballpoint pen ink composition exceeds 40 mass%, solubility in the ink is likely to be poor, and the ink viscosity becomes too high, so that the ink consumption is likely to be reduced, and the writing feel and writing performance are likely to be affected. Therefore, the total content of the resin with respect to the total amount of the oil-based ballpoint pen ink composition is preferably 3% by mass or more and 40% by mass or less, and in more consideration, the total content is preferably 5% by mass or more and 30% by mass or less, and preferably 10% by mass or more and 25% by mass or less.

The oil-based ballpoint pen ink composition of the oil-based ballpoint pen of the present invention may appropriately contain a stringiness imparting agent in addition to the resin as described above. In particular, by formulating the polyvinylpyrrolidone resin, the binding property of the ink is enhanced, and the generation of excess ink at the tip of the tip is easily suppressed. Therefore, the oil-based ballpoint pen ink composition preferably contains a polyvinylpyrrolidone resin. When the content of the polyvinylpyrrolidone resin is less than 0.01 mass% with respect to the total amount of the oil-based ballpoint pen ink composition, it is difficult to suppress the generation of excess ink. When the content is more than 3.0 mass%, solubility in the ink tends to be poor. Therefore, the content of the polyvinylpyrrolidone resin with respect to the total amount of the oil-based ballpoint pen ink composition is preferably 0.01 mass% or more and 3.0 mass% or less. Considering the above reason, the content is preferably 0.1 mass% or more and 2.0 mass% or less. Specific examples of the polyvinylpyrrolidone resin include PVP series (manufactured by ASP JAPAN CO., LTD.). These may be used alone or in combination of two or more kinds.

### (Surfactant)

The oil-based ballpoint pen ink composition of the present invention contains a surfactant. When the oil-based ballpoint pen ink composition contains a surfactant, it is possible to improve the wettability to the non-permeable surface, to write on not only the paper surface but also the non-permeable surface, to improve the lubricity, and to improve the writing performance when the tip part of the tip is dried in a state where the tip part of the tip is left in the atmosphere.

The surfactant preferably includes one kind or two or more kinds of surfactants selected from a phosphate ester-based surfactant, a silicone-based surfactant, a surfactant having an acetylene bond, a fluorine-based surfactant, a fatty acid, and a fatty acid ester.

Among the surfactants, it is preferable to use a phosphate ester-based surfactant or a silicone-based surfactant in consideration of improving wettability to the non-permeable surface to suppress handwriting repelling, enabling good writing on the non-permeable surface, and improving writing performance. Furthermore, the phosphate ester-based surfactant is preferable because an effect of easily improving writing feel and writing performance can be obtained. As the surfactant, it is preferable to use a phosphate ester-based surfactant and a silicone-based surfactant in combination.

Specific examples of the phosphate ester-based surfactant include phosphate esters having an alkoxyethyl group (CₙH₂ₙ₊₁OCH₂CH₂O) or an alkoxy group (CₙH₂ₘ₊₁O), phosphate monoesters of polyoxyethylene alkyl ethers or polyoxyethylene alkyl aryl ethers, phosphate diesters of polyoxyethylene alkyl ethers or polyoxyethylene alkyl aryl ethers, phosphate triesters of polyoxyethylene alkyl ethers or polyoxyethylene alkyl aryl ethers, alkyl phosphate esters, alkyl ether phosphate esters, and derivatives thereof.

Specific examples of the phosphate ester-based surfactant include a phoslex series (manufactured by SC Organic Chemical Co., Ltd.), a JP series (manufactured by Johoku Chemical Co., Ltd.), a PLYSURF series (manufactured by DKS Co. Ltd.), a Phosphanol series (manufactured by TOHO Chemical Industry Co., Ltd.), and a NIKKOL series (manufactured by Nikko Chemicals Co., Ltd.).

Among the phosphate ester-based surfactants, in consideration of improving the writing performance and improving the writing feel, the phosphate ester having an alkoxyethyl group (CₙH₂ₙ₊₁O-C₂H₄O) or an alkoxy group (CₘH₂ₘ₊₁O), the phosphate monoester of polyoxyethylene alkyl ether or polyoxyethylene alkyl aryl ether, and the phosphate diester of polyoxyethylene alkyl ether or polyoxyethylene alkyl aryl ether are preferable.

Furthermore, among the phosphate ester-based surfactants, it is preferable to use a phosphate ester-based surfactant having an alkoxyethyl group (CₙH₂ₙ₊₁O-C₂H₄O) or an alkoxy group (CₘH₂ₘ₊₁O) in consideration of improving the writing feel by improving the writing performance on the non-permeable surface, and it is more preferable to use a phosphate ester-based surfactant having an alkoxyl group (CₘH₂ₘ₊₁O) in more consideration.

Regarding the phosphate ester-based surfactant, the carbon chain (n, m) of the terminal alkyl group of the alkoxyethyl group (CₙH₂ₙ₊₁O-C₂H₄O) or the alkoxy group (CₘH₂ₘ₊₁O) is preferably 1 or more and 20 or less. Furthermore, when the carbon chain (n, m) of the terminal alkyl group of the alkoxyethyl group (CₙH₂ₙ₊₁O-C₂H₄O) or the alkoxy group (CₘH₂ₘ₊₁O) has an appropriate length, it is easy to keep good writing performance on the non-permeable surface. Therefore, the carbon chain (n, m) of the terminal alkyl group is preferably 4 or more and 20 or less. In more consideration, the carbon chain (n, m) is preferably 8 or more and 18 or less, and the carbon chain (n, m) is preferably 12 or more and 18 or less.

Specific examples of the silicone-based surfactant include dimethyl silicone, methyl phenyl silicone, polyether-modified silicone, and higher fatty acid ester-modified silicone. Among the silicone-based surfactants, it is preferable to use a polyether-modified silicone in consideration of improving wettability to the non-permeable surface.

Specific examples of the silicone-based surfactant include a BYK series (manufactured by BYK Japan KK), an L series, an FZ series (manufactured by Dow Corning Toray Co., Ltd.), a KF series (manufactured byShin-Etsu Chemical Co., Ltd.), a SILFACE series (manufactured by Nissin Chemical Industry Co., Ltd.), and a DISPARLON, series (manufactured by Kusumoto Chemicals, Ltd.).

Regarding the HLB value of the surfactant, the HLB value is preferably 12 or less in consideration of improving wettability to the non-permeable surface, writing performance, and writing feel, and more preferably 9 or less in more consideration. Furthermore, in consideration of ink temporal stability, the HLB value is preferably 3 or more, and the HLB value is preferably 5 or more in more consideration.

The HLB value used in the present invention can be obtained from a Griffin method, an upstream method, or the like.

The content of the surfactant is more preferably 0.1 mass% or more and 5.0 mass% or less with respect to the total amount of the oil-based ballpoint pen ink composition. This is because when the content is less than 0.1 mass%, it tends to be difficult to obtain desired wettability and lubricity to the non-permeable surface, and when the content is more than 5.0 mass%, the ink tends to be unstable over time. In consideration of these tendencies, the content of the surfactant with respect to the total amount of the oil-based ballpoint pen ink composition is preferably 0.3 mass% or more and 4.0 mass% or less, and more preferably 0.5 mass% or more and 3.0 mass% or less in more consideration.

### (Silica)

The oil-based ballpoint pen ink composition of the oil-based ballpoint pen of the present invention preferably further contains silica.

When the oil-based ballpoint pen ink composition of the present invention further contains silica, it is possible to obtain an effect of ink leakage suppression from the gap between the ball and the tip of the tip (weighted ink leakage suppression) even when the ink viscosity is set to 300 mPa·s or less at 20°C and a shear rate of 200 sec⁻¹ and the ink consumption per a writing distance of 100 m of the oil-based ballpoint pen is set to 80 mg or more. Further, when the oil-based ballpoint pen ink composition further contains silica, the rotational resistance of the ball of the ballpoint pen tip can be alleviated, and the writing feel can be more favorably maintained.

As the silica contained in the oil-based ballpoint pen ink composition of the present invention, both hydrophilic silica and hydrophobic silica can be used, but in consideration of the effect of ink leakage suppression, it is preferable to use hydrophobic silica.

As the silica, silica treated with a surface treatment agent is preferably used in consideration of temporal stability in the oil-based ballpoint pen ink composition. Regarding the surface treatment, it is preferable to perform the surface treatment so as to have alkylsilyl, alkylsiloxane, aminoalkylsilyl, methacrylsilyl, or the like as a surface modifying group of silica. In more consideration of ink leakage suppression, it is preferable to perform surface treatment so as to have alkylsilyl as a surface modifying group of silica, and in more consideration, it is preferable to perform surface treatment so as to have dimethylsilyl.

In addition, as the average primary particle size of the silica is smaller, it is easy to take a weak aggregation structure and to suppress ink leakage. Therefore, the average primary particle size of silica is preferably 50 nm or less, more preferably 30 nm or less in more consideration, and more preferably 20 nm or less in more consideration. In addition, when the average primary particle size of silica is less than 5 nm, the effect of ink leakage suppression is likely to be affected because the average primary particle size is too small. Therefore, the average primary particle size of silica is preferably 5 nm or more, and more preferably 10 nm or more in more consideration. The average primary particle size (D50) is determined by an average value of values measured with an electron microscope at n = 100.

The specific surface area of the silica is preferably 30 m²/g or more and 300 m²/g or less in consideration of the ink leakage suppression effect. The specific surface area of silica is more preferably 50 m²/g or more and 250 m²/g or less, and more preferably 100 m²/g or more and 220 m²/g or less when considering more ink leakage suppression and ink temporal stability.

Here, the "specific surface area" means a surface area per 1 g. The "specific surface area" can be measured by a BET method.

The content of the silica is preferably 0.01 mass% or more and 3 mass% or less with respect to the total amount of the oil-based ballpoint pen ink composition. This is because when the content of the silica is less than 0.01 mass%, it is difficult to suppress ink leakage, and when the content is more than 3 mass%, ink temporal stability is easily affected. The content of silica is preferably 0.01 mass% or more and 1 mass% or less in consideration of ink leakage suppression and ink temporal stability, and more preferably 0.01 mass% or more and 0.5 mass% or less in more consideration.

Examples of the silica include hydrophobic silica and hydrophilic silica include an AEROSIL series (manufactured by NIPPON AEROSIL CO., LTD.).

### (Organic amine)

The oil-based ballpoint pen ink composition of the oil-based ballpoint pen of the present invention preferably further contains an organic amine in consideration of the stability of the ink component in the ink. Examples of the organic amine include amines having ethylene oxide such as oxyethylene alkylamine and polyoxyethylene alkylamine, alkylamines such as laurylamine and stearylamine, and aliphatic amines such as dimethylalkylamines such as distearylamine, dimethyllaurylamine, dimethylstearylamine, and dimethyloctylamine. Among them, an amine having ethylene oxide and a dimethylalkylamine are preferable as the organic amine in consideration of stability in the ink. In particular, when the oil-based ballpoint pen ink composition contains a phosphate ester-based surfactant, it is preferable that the composition contains an organic amine because the composition is stabilized in the ink by neutralization, so that the effect of the phosphate ester-based surfactant is easily obtained.

As for the reactivity between the organic amine and other components in the ink, a primary amine has the strongest reactivity, followed by a secondary amine, a tertiary amine, and then reactivity decreases. Therefore, in consideration of ink temporal stability, it is preferable to use a secondary amine or a tertiary amine as the organic amine. These may be used alone or in combination of two or more kinds.

Furthermore, the total amine value of the organic amine is preferably 70 mgKOH/g or more and 300 mgKOH/g or less in consideration of stability with the ink component. This is because when the content is more than 300 mgKOH/g, reactivity is strong, and therefore the ink easily reacts with the above components, so that temporal stability of the ink is easily deteriorated. When the total amine value is less than 70 mgKOH/g, the temporal stability of the ink is easily affected. The total amine value is preferably in a range of 100 mgKOH/g or more and 300 mgKOH/g or less in consideration of stability with the component, and is preferably 150 mgKOH/g or more and 300 mgKOH/g or less, and is preferably 180 mgKOH/g or more and 280 mgKOH/g or less in consideration of more stability.

The total amine value indicates the total amount of primary, secondary, and tertiary amines, and is represented by the number of mg of potassium hydroxide equivalent to the hydrochloric acid required to neutralize 1 g of a sample.

The content of the organic amine is preferably 0.1 mass% or more and 10.0 mass% or less with respect to the total amount of the oil-based ballpoint pen ink composition in consideration of stability with the ink component. Furthermore, in consideration of neutralization with respect to a surfactant such as a phosphate ester-based surfactant, the content of the organic amine with respect to the total amount of the oil-based ballpoint pen ink composition is preferably 0.1 mass% or more and 5.0 mass% or less, and more preferably 0.3 mass% or more and 3.0 mass% or less in more consideration.

In addition, the oil-based ballpoint pen ink composition of the oil-based ballpoint pen of the present invention may appropriately contain a colorant stabilizer, a plasticizer, a chelating agent, an antifoaming agent, water, a pseudoplastic imparting agent, and the like. These may be used alone or in combination of two or more kinds.

### (Ballpoint pen)

Next, a ballpoint pen using the oil-based ballpoint pen ink composition of the present invention is described.

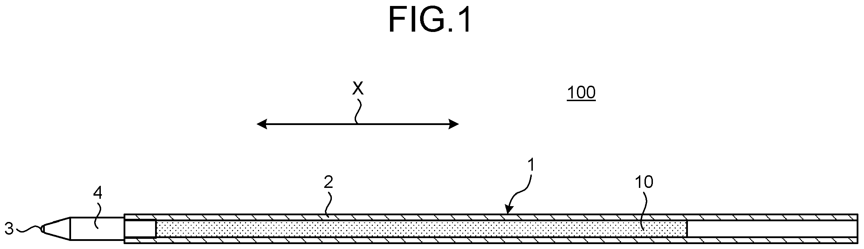

FIG. 1 is a cross-sectional view of an example of a ballpoint pen 100 of the present embodiment. The ballpoint pen 100 is an example of an oil-based ballpoint pen.

The ballpoint pen 100 has a ballpoint pen refill 1. The ballpoint pen refill 1 is a refill lead for the ballpoint pen 100. The ballpoint pen refill 1 has an ink storage cylinder 2. The ink storage cylinder 2 has a long cylindrical in the extending direction X. The extending direction X is a direction along a straight line passing through the center of the cut surface of the cylindrical ink storage cylinder 2. In other words, the extending direction X is a direction along the central axis of the cylindrical ink storage cylinder 2.

An oil-based ballpoint pen ink composition 10 is contained in the ink storage cylinder 2. The oil-based ballpoint pen ink composition 10 is the oil-based ballpoint pen ink composition of the present invention described above. As described above, in the present embodiment, the oil-based ballpoint pen ink composition is referred to as an oil-based ballpoint pen ink composition, an ink composition, or an ink.

A ballpoint pen tip 4 is provided at one end part of the ink storage cylinder 2 in the extending direction X. The ballpoint pen tip 4 is a member that rotatably holds a ball 3. That is, the ballpoint pen tip 4 holds the ball 3 at a tip part which is one end part of the ink storage cylinder 2 in the extending direction X.

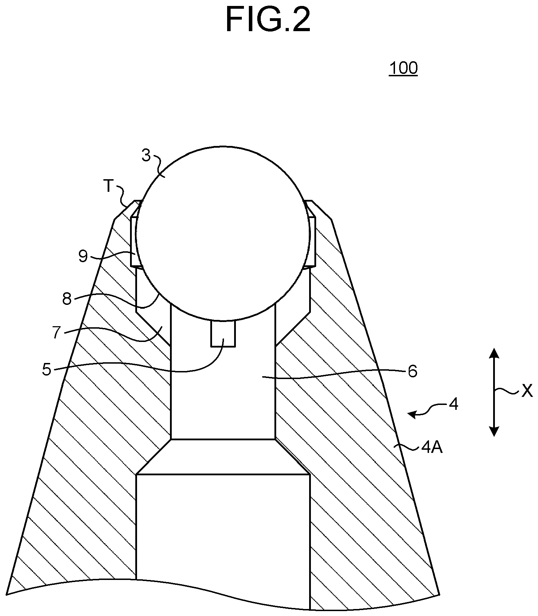

FIG. 2 is an enlarged cross-sectional view of an example of a ballpoint pen tip 4. The ballpoint pen tip 4 includes a tip main body 4A. The tip main body 4A is provided with a coil spring 5, an ink circulation hole 6, an ink circulation groove 7, a ball seat 8, and a ball holding chamber 9.

The ink circulation hole 6 is a hole part that penetrates in the extending direction X and through which ink flows. The ink is the oil-based ballpoint pen ink composition 10. The ink circulation groove 7 is a groove part radially extending from the ink circulation hole 6. The ball holding chamber 9 is provided at an end part of the ink circulation hole 6, and has the ball seat 8 on which a ball 3 is placed. The ball seat 8 is provided with a coil spring 5, and presses the ball 3 placed on the ball seat 8 toward the inner wall of the tip T of the tip. When the ball 3 is placed on the ball seat 8, the ball 3 is rotatably held so that a part of the ball 3 protrudes from the tip T of the tip.

When writing is performed using the ballpoint pen 100 having the ballpoint pen refill 1, the ink which is the oil-based ballpoint pen ink composition 10 flowing out of the ink storage cylinder 2 is supplied from the ink circulation hole 6 to the ball 3 held in the ball holding chamber 9 through the ink circulation groove 7. By supplying the ink to the ball 3, writing with the ink is performed on a paper surface or the like.

The oil-based ballpoint pen ink composition 10 stored in the ink storage cylinder 2 is the oil-based ballpoint pen ink composition of the present invention described above.

The movement amount of the ball 3 of the ballpoint pen tip 4 of the ballpoint pen 100 of the present invention in the extending direction X is preferably 10 µm or more and 50 µm or less. The movement amount of the ball 3 in the extending direction X means a distance in which the ball 3 can move in the extending direction X with respect to the tip main body 4A. The movement amount may be referred to as a clearance.

When the movement amount of the ball 3 in the extending direction X is less than 10 µm, it is difficult to secure a desired ink consumption, and it is difficult to obtain a dense handwriting and a writing properties and a writing feel on a non-permeable surface. On the other hand, when the movement amount of the ball 3 in the extending direction X exceeds 50 µm, ink leakage suppression, excessive ink adhesion, bleeding, handwriting drying characteristics, and strike-through are easily affected. In more consideration, the movement amount is preferably 20 µm or more and 50 µm or less, and more preferably 25 µm or more and 45 µm or less.

In the present invention, the movement amount of the ball 3 of the ballpoint pen tip 4 in the extending direction X represents the movement amount of the ball 3 in the extending direction X of the ballpoint pen tip 4 of the ballpoint pen 100 in the initial state before the start of writing.

As described above, the diameter of the ball 3 is not limited. As described above, the diameter of the ball 3 is preferably about 0.1 mm or more and 2.0 mm or less, and particularly preferably in the range of 0.3 mm or more and 1.6 mm or less.

As described above, the ratio of the ink consumption A (mg) per writing distance of 100 mm to the ball diameter B (mm) which is the diameter (mm) of the ball 3 of the ballpoint pen 100 which is the oil-based ballpoint pen of the present invention (ink consumption/ball diameter = A/B) satisfies the relationship of 100 < A/B < 600. When A/B satisfies this relationship, writing can be performed not only on the paper surface but also on the non-permeable surface while a dense handwriting is maintained, ink leakage can be suppressed, and writing properties such as handwriting blurring, strike-through, excessive ink adhesion, bleeding, and dryness can be improved.

The arithmetic average roughness (Ra) of the surface of the ball 3 of the ballpoint pen tip 4 used in the present invention is preferably 0.1 nm or more and 12 nm or less. This is because, if the arithmetic average roughness (Ra) is less than 0.1 nm, the ink is hardly sufficiently placed on the surface of the ball 3, it is difficult to obtain a dense handwriting at the time of writing, and line skipping and blurring easily occur in the handwriting. If the arithmetic average roughness (Ra) exceeds 12 nm, the surface of the ball 3 is too rough, and the rotational resistance of the ball 3 and the ball seat 8 is large, so that the writing feel is likely to be poor, and furthermore, writing properties such as blurring, line skipping, and line unevenness in the handwriting is likely to be affected. In addition, when the arithmetic average roughness (Ra) is 0.1 nm or more and 10 nm or less, the writing properties on the non-permeable surface is easily maintained. More preferably, the arithmetic average roughness (Ra) is 0.1 nm or more and 8 nm or less. The arithmetic average roughness (Ra) of the ball 3 can be measured by (model name SPI3800N manufactured by Seiko Epson Corporation). The arithmetic average roughness (Ra) is a value obtained by extracting only a reference length in the direction of the average line from the roughness curve measured by the surface roughness measuring device, summing absolute values of deviations from the average line of the extracted part to the measurement curve, and averaging the summed absolute values.

The material used for the ball 3 is not particularly limited, and examples thereof include a cemented carbide ball containing tungsten carbide as a main component, metal balls such as stainless steel, ceramic balls such as silicon carbide, silicon nitride, alumina, silica, and zirconia, ruby balls, and the like.

Examples of the material of the ballpoint pen tip 4 include metal materials such as stainless steel, nickel silver, brass, aluminum bronze, and aluminum, and resin materials such as polycarbonate, polyacetal, and ABS. In consideration of wear, temporal stability, and cost of the ball seat 8, the ballpoint pen tip 4 is preferably a tip main body 4A made of stainless steel.

### Examples

Hereinafter, the present invention is specifically described with reference to Examples. However, the present invention is not limited to the following Examples.

### Example 1

In the oil-based ballpoint pen ink composition of Example 1, a dye as a colorant, a lower alcohol, ethylene glycol monophenyl ether as an organic solvent, a phosphate ester-based surfactant having an alkoxyl group as a surfactant, polyether-modified silicone, polyoxyethylene alkylamine as an organic amine, and a terpene phenol resin were employed, weighed in predetermined amounts, heated to 60°C, and then completely dissolved using a disper stirrer to obtain an oil-based ballpoint pen ink composition.

Specific formulation amounts are as follows. The ink viscosity (mPa·s) of the oil-based ballpoint pen ink composition of Example 1 at a shear rate of 200 sec⁻¹ was measured in an environment of 20°C using a viscometer RVDVII+Pro CP-42 spindle manufactured by Brookfield.

### Example 1 (ink formulation)

· Colorant (salt forming dye) 10.0 mass%
· Organic solvent (lower alcohol: mixture of ethanol (boiling point: 79°C) and isopropyl alcohol (boiling point: 82°C)) 52.7 mass%
· Organic solvent (boiling point of ethylene glycol monophenyl ether: 245°C)
   3.0 mass%
· Silica 0 mass%
· Phosphate ester-based surfactant (phosphate ester-based surfactant having alkoxyl group (CₘH₂ₘ₊₁O) : m = 18) 1.0 mass%
· Silicone-based surfactant (polyether-modified silicone, HLB value: 6)
   0.3 mass%
· Organic amine (polyoxyethylene alkylamine) 2.0 mass%
· Terpene phenol resin (hydroxyl value: 160 mgKOH/g)
   31.0 mass%

The measurement and evaluation results are shown in Tables 1 to 5.

### Examples 2 to 33

As shown in Tables 1 to 5, oil-based ballpoint pen ink compositions of Examples 2 to 33 were obtained in the same procedure as in Example 1 except that the ink component and the tip specification were changed. The measurement and evaluation results are shown in Tables 1 to 5.

### Comparative Examples 1 to 6

As shown in Tables 1 to 5, the oil-based ballpoint pen ink compositions of Comparative Examples 1 to 6 were obtained by the same procedure as in Example 1 except that the ink component and the tip specification were changed. The measurement and evaluation results are shown in Tables 1 to 5.

**Table 1**

| Examples/Comparative Examples | | | Example 1 | Example 2 | Example 3 | Example 4 | Example 5 | Example 6 | Example 7 | Example 8 |
|---|---|---|---|---|---|---|---|---|---|---|
| Colorant | (1) | Salt forming dye | 10.0 | 10.0 | 10.0 | 10.0 | 10.0 | 10.0 | 10.0 | 10.0 |
| | | Nigrosine dye | | | | | | | | |
| | (2) | Gold-containing dye | | | | | | | | |
| | (2) | Pigment dispersion (Carbon black pigment content 20%, Polyvinyl butvral resins 16% contains, average particle size 150nm) | | | | | | | | |
| Organic solvent | | Lower alcohol (Mixture of ethanol (boiling point: 79°C) and isopropyl alcohol (boiling point: 82°C)) | 52.7 | 64.7 | 55.8 | 47.7 | 60.5 | 67.7 | 71.7 | 59.7 |
| | | Ethylene glycol monophenyl ether (boiling point: 245°C) | 3.0 | 3.0 | 3.0 | 3.0 | 3.0 | 3.0 | 3.0 | 3.0 |
| | | Benzyl alcohol (boiling point: 205°C) | | | | | | | | |
| Silica | (12) | Hydrophobic silica (average primary particle size 16nm, specific surface area 130m²/g) | | | | | | | | |
| | (13) | Hydrophobic silica (average primary particle size 12nm, specific surface area 200m²/g) | | | | | | | | |
| | (14) | Hydrophilic silica (average primary particle size 40nm, specific surface area 50m²/g) | | | | | | | | |
| Phosphate ester-based surfactant having alkoxyethyl group (CₙH₂ₙ₊₁OCH₂CH₂O), alkoxy group (CₘH₂ₘ₊₁O) | (3) | Stearyl acid phosphate (m = 18) | 1.0 | 1.0 | 2.0 | 1.0 | 1.0 | 1.0 | 1.0 | 1.0 |
| | (3) | Lauryl acid phosphate (m = 12) | | | | | | | | |
| | (4) | Mixture of monoester of butoxyethyl acid phosphate (n = 4) and diester of butoxyethyl acid phosphate (n = 4) | | | | | | | | |
| | (5) | Phosphate ester-based surfactant (HLB: 8) | | | | | | | | |
| Silicone-based surfactant | (6) | Polvether-modified silicone (HLB: 6) | 0.3 | 0.3 | 0.2 | 0.3 | 0.5 | 0.3 | 0.3 | 0.3 |
| | (6) | Polvether-modified silicone (HLB: 9) | | | | | | | | |
| Organic amine | (7) | Polyoxyethylene alkylamine (total amine value: 254-265, tertiary amine) | 2.0 | 2.0 | | 3.0 | 2.0 | 2.0 | 2.0 | 2.0 |
| | (8) | Polyoxyethylene alkylamine (total amine value: 232-246, secondary amine) | | | 2.0 | | | | | |
| Resin | (9) | Terpene phenol resin (hydroxyl value: 160, softening point 125±5°C) | 31.0 | 19.0 | 27.0 | 35.0 | | | | |
| | (10) | Terpene phenol resin (hydroxyl value: 100, softening point 145±5°C) | | | | | 23.0 | | | |
| | (11) | Styrene-acrylic resin (acid value: 240, mass average molecular weight 10000) | | | | | | 16.0 | 12.0 | 24.0 |
| | (11) | Styrene-maleic acid resin (acid value: 190, mass average molecular weight 12000) | | | | | | | | |
| | (11) | Acrylic resin (acid value: 80, mass average molecular weight 17000) | | | | | | | | |
| Sum total | | | 100.0 | 100.0 | 100.0 | 100.0 | 100.0 | 100.0 | 100.0 | 100.0 |
| Ink viscosity (mPa s) of oil-based ballpoint pen ink composition at 20°C and shear rate of 200sec⁻¹ | | | 30 | 8 | 20 | 55 | 20 | 22 | 10 | 84 |
| Ink consumption (mg) of ballpoint pen per 100m | | | 140 | 227 | 170 | 113 | 170 | 165 | 225 | 112 |
| Ball diameter (mm) | | | 0.38 | 0.38 | 0.38 | 0.38 | 0.38 | 0.38 | 0.38 | 0.38 |
| A/B when A (mg) is ink consumption per 100m, and B (mm) is ball diameter | | | 368 | 597 | 447 | 297 | 447 | 434 | 592 | 295 |
| Arithmetic average roughness (Ra) of surface of ball (nm) | | | 1 | 1 | 1 | 1 | 1 | 1 | 1 | 1 |
| Movement amount of ball (µm) | | | 35 | 35 | 35 | 35 | 35 | 35 | 35 | 35 |
| Evaluation | Density of handwriting | | ⊚ | ⊚ | ⊚ | ○ | ⊚ | ⊚ | ⊚ | ○ |
| | Writing properties test 1 on non-permeable surface | | ⊚ | ⊚ | ⊚ | ○ | ⊚ | ⊚ | ⊚ | ○ |
| | Writing properties test 2 on non-permeable surface | | ⊚ | ○ | ⊚ | ○ | ⊚ | ⊚ | ○ | ○ |
| | Writing performance test | | ○ | ⊚ | ⊚ | ○ | ⊚ | ⊚ | ⊚ | ○ |
| | Writing feel | | ⊚ | ⊚ | ⊚ | ⊚ | ⊚ | ⊚ | ⊚ | ○ |
| | Weighted ink leakage suppression test | | | | | | | | | |

**Table 2**

| Examples/Comparative Examples | | | Example 9 | Example 10 | Example 11 | Example 12 | Example 13 | Example 14 | Example 15 | Example 16 |
|---|---|---|---|---|---|---|---|---|---|---|
| Colorant | (1) | Salt forming dye | 10.0 | 10.0 | 10.0 | 10.0 | 10.0 | | | |
| | | Nigrosine dye | | | | | | 10.0 | | |
| | (2) | Gold-containing dye | | | | | | | 10.0 | |
| | (2) | Pigment dispersion (Carbon black pigment content 20%, Polyvinyl butvral resins 16% contains, average particle size 150nm) | | | | | | | | 200 |
| Organic solvent | | Lower alcohol (Mixture of ethanol (boiling point: 79°C) and isopropyl alcohol (boiling point: 82°C)) | 67.7 | 67.7 | 56.7 | 56.7 | 56.7 | 56.2 | 55.7 | 46.7 |
| | | Ethvlene glycol monophenyl ether (boiling point: 245°C) | 3.0 | 3.0 | 3.0 | 3.0 | 3.0 | 3.0 | 3.0 | 3.0 |
| | | Benzyl alcohol (boiling point: 205°C) | | | | | | | | |
| Silica | (12) | Hydrophobic silica (average primary particle size 16nm, specific surface area 130m²/g) | | | | | | | | |
| | (13) | Hydrophobic silica (average primary particle size 12nm, specific surface area 200m²/g) | | | | | | | | |
| | (14) | Hydrophilic silica (average primary particle size 40nm, specific surface area 50m²/g) | | | | | | | | |
| Phosphate ester-based surfactant having alkoxyethyl group (CₙH₂ₙ₊₁OCH₂CH₂O), alkoxy group (CₘH₂ₘ₊₁O) | (3) | Stearyl acid phosphate (m = 18) | 1.0 | 1.0 | | | 1.0 | 0.5 | 1.0 | 1.0 |
| | (3) | Lauryl acid phosphate (m = 12) | | | | | | | | |
| | (4) | Mixture of monoester of butoxyethyl acid phosphate (n = 4) and diester of butoxyethyl acid phosphate (n = 4) | | | 1.0 | | | | | |
| | (5) | Phosphate ester-based surfactant (HLB: 8) | | | | 1.0 | | | | |
| Silicone-based surfactant | (6) | Polyether-modified silicone (HLB: 6) | 0.3 | 0.3 | 0.3 | 0.3 | | 0.3 | 0.3 | 0.3 |
| | (6) | Polyether-modified silicone (HLB: 9) | | | | | 0.3 | | | |
| Organic amine | (7) | Polyoxyethylene alkylamine (total amine value: 254-265, tertiary amine) | 2.0 | 2.0 | 2.0 | 2.0 | 2.0 | 3.0 | 2.0 | 2.0 |
| | (8) | Polyoxyethylene alkylamine (total amine value: 232-246, secondary amine) | | | | | | | | |
| Resin | (9) | Terpene phenol resin (hydroxyl value: 160, softening point 125±5°C) | | | 27.0 | 27.0 | 27.0 | 27.0 | 28.0 | 27.0 |
| | (10) | Terpene phenol resin (hydroxyl value: 100, softening point 145±5°C) | | | | | | | | |
| | (11) | Styrene-acrylic resin (acid value: 240, mass average molecular weight 10000) | | | | | | | | |
| | (11) | Styrene-maleic acid resin (acid value: 190, mass average molecular wei4ht 12000) | 16.0 | | | | | | | |
| | (11) | Acrylic resin (acid value: 80, mass average molecular weight 17000) | | 16.0 | | | | | | |
| Sum total | | | 1000 | 100.0 | 100.0 | 100.0 | 100.0 | 100.0 | 100.0 | 100.0 |
| Ink viscosity (mPa s) of oil-based ballpoint pen ink composition at 20°C and shear rate of 200sec⁻¹ | | | 20 | 20 | 20 | 20 | 20 | 20 | 21 | 20 |
| Ink consumption (mg) of ballpoint pen per100m | | | 170 | 170 | 170 | 170 | 170 | 170 | 170 | 170 |
| Ball diameter (mm) | | | 0.38 | 0.38 | 0.38 | 0.38 | 0.38 | 0.38 | 0.38 | 0.38 |
| A/B when A (mg) is ink consumption per 100m, and B (mm) is ball diameter | | | 447 | 447 | 447 | 447 | 447 | 447 | 447 | 447 |
| Arithmetic average roughness (Ra) of surface of ball (nm) | | | 1 | 1 | 1 | 1 | 1 | 1 | 1 | 1 |
| Movement amount of ball (µm) | | | 35 | 35 | 35 | 35 | 35 | 35 | 35 | 35 |
| Evaluation | Density of handwriting | | ⊚ | ⊚ | ⊚ | ⊚ | ⊚ | ⊚ | ⊚ | ⊚ |
| | Writing properties test 1 on non-permeable surface | | ⊚ | ⊚ | ⊚ | ⊚ | ⊚ | ⊚ | ⊚ | ⊚ |
| | Writing properties test 2 on non-permeable surface | | ⊚ | ⊚ | ⊚ | ⊚ | ○ | ⊚ | ⊚ | ⊚ |
| | Writing performance test | | ⊚ | ⊚ | ○ | ⊚ | ○ | ⊚ | ⊚ | ⊚ |
| | Writing feel | | ⊚ | ⊚ | ○ | ○ | ⊚ | ⊚ | ⊚ | ⊚ |
| | Weighted ink leakage suppression test | | | | | | | | | |

**Table 3**

| Examples/Comparative Examples | | | Example 17 | Example 18 | Example 19 | Example 20 | Example 21 | Example 22 | Example 23 | Example 24 |
|---|---|---|---|---|---|---|---|---|---|---|
| Colorant | (1) | Salt forming dye | 10.0 | 10.0 | 10.0 | 10.0 | 10.0 | 10.0 | 10.0 | 10.0 |
| | | Nigrosine dye | | | | | | | | |
| | (2) | Gold-containing dye | | | | | | | | |
| | (2) | Pigment dispersion (Carbon black pigment content 20%, Polyvinyl butvral resins 16% contains, average particle size 150 nm) | | | | | | | | |
| Organic solvent | | Lower alcohol (Mixture of ethanol (boiling point: 79°C) and isopropyl alcohol (boiling point: 82°C)) | 52.7 | 49.5 | 65.5 | 71.7 | 60.7 | 60.7 | 52.7 | 55.8 |
| | | Ethvlene glycol monophenyl ether (boiling point: 245°C) | | 3.0 | 3.0 | 1.0 | 3.0 | 3.0 | 3.0 | 3.0 |
| | | Benzyl alcohol (boiling point: 205°C) | 5.0 | | | | | | | |
| Silica | (12) | Hydrophobic silica (average primary particle size 16nm, specific surface area 130m²/g) | | | | | | | | |
| | (13) | Hydrophobic silica (average primary particle size 12nm, specific surface area 200m²/g) | | | | | | | | |
| | (14) | Hydrophilic silica (average primary particle size 40nm, specific surface area 50m²/g) | | | | | | | | |
| Phosphate ester-based surfactant having alkoxyethyl group (CₙH₂ₙ₊₁OCH₂CH₂O), alkoxy group (CₘH₂ₘ₊₁O) | (3) | Stearyl acid phosphate (m = 18) | 1.0 | 1.0 | 1.0 | 1.0 | 1.0 | 1.0 | | |
| | (3) | Lauryl acid phosphate (m = 12) | | | | | | | 1.0 | 2.0 |
| | (4) | Mixture of monoester of butoxyethyl acid phosphate (n = 4) and diester of butoxyethyl acid phosphate (n = 4) | | | | | | | | |
| | (5) | Phosphate ester-based surfactant (HLB: 8) | | | | | | | | |
| Silicone-based surfactant | (6) | Polyether-modified silicone (HLB: 6) | 0.3 | 0.5 | 0.5 | 0.3 | 0.3 | 0.3 | 0.3 | 0.2 |
| | (6) | Polyether-modified silicone (HLB: 9) | | | | | | | | |
| Organic amine | (7) | Polyoxyethylene alkylamine (total amine value: 254-265, tertiary amine) | 2.0 | 1.0 | 1.0 | | 2.0 | 2.0 | 2.0 | |
| | (8) | Polyoxyethylene alkylamine (total amine value: 232-246, secondary amine) | | | | 1.0 | | | | 2.0 |
| Resin | (9) | Terpene phenol resin (hydroxyl value: 160, softening point 125±5°C) | 29.0 | 35.0 | 19.0 | 150 | 23.0 | 23.0 | 31.0 | 27.0 |
| | (10) | Terpene phenol resin (hydroxyl value: 100, softening point 145±5°C) | | | | | | | | |
| | (11) | Styrene-acrylic resin (acid value: 240, mass average molecular weight 10000) | | | | | | | | |
| | (11) | Styrene-maleic acid resin (acid value: 190, mass average molecular wei4ht 12000) | | | | | | | | |
| | (11) | Acrylic resin (acid value: 80, mass average molecular weight 17000) | | | | | | | | |
| Sum total | | | 100.0 | 100.0 | 100.0 | 100.0 | 100.0 | 100.0 | 100.0 | 100.0 |
| Ink viscosity (mPa s) of oil-based ballpoint pen ink composition at 20°C and shear rate of 200sec⁻¹ | | | 24 | 63 | 8 | 8 | 20 | 20 | 30 | 20 |
| Ink consumption (mg) of ballpoint pen per 100m | | | 160 | 81 | 140 | 250 | 227 | 115 | 140 | 170 |
| Ball diameter (mm) | | | 0.38 | 0.7 | 0.38 | 0.7 | 0.7 | 0.7 | 0.38 | 0.38 |
| A/B when A (mg) is ink consumption per 100m, and B (mm) is ball diameter | | | 421 | 116 | 368 | 357 | 324 | 164 | 368 | 447 |
| Arithmetic average roughness (Ra) of surface of ball (nm) | | | 1 | 1 | 3 | 1 | 1 | 3 | 1 | 1 |
| Movement amount of ball (um) | | | 35 | 25 | 25 | 35 | 35 | 30 | 35 | 35 |
| Evaluation | Density of handwriting | | ⊚ | ○ | ⊚ | ⊚ | ⊚ | ⊚ | ⊚ | ⊚ |
| | Writing properties test 1 on non-permeable surface | | ⊚ | ○ | ⊚ | ⊚ | ⊚ | ○ | ⊚ | ⊚ |
| | Writing properties test 2 on non-permeable surface | | ⊚ | ○ | ⊚ | ⊚ | ⊚ | ○ | ⊚ | ⊚ |
| | Writing performance test | | ⊚ | ○ | ⊚ | ⊚ | ⊚ | ⊚ | ○ | ⊚ |
| | Writing feel | | ⊚ | ○ | ⊚ | ⊚ | ⊚ | ○ | ⊚ | ⊚ |
| | Weighted ink leakage suppression test | | | | | | | | | |

**Table 4**

| Examples/Comparative Examples | | | Example 25 | Example 26 | Example 27 | Example 28 | Example 29 | Example 30 | Example 31 | Example 32 |
|---|---|---|---|---|---|---|---|---|---|---|
| Colorant | (1) | Salt forming dye | | 10.0 | 10.0 | 10.0 | 10.0 | 10.0 | 10.0 | 10.0 |
| | | Nigrosine dye | 10.0 | | | | | | | |
| | (2) | Gold-containing dye | | | | | | | | |
| | (2) | Pigment dispersion (Carbon black pigment content 20%, Polyvinyl butvral resins 16% contains, average particle size 150nm) | | | | | | | | |
| Organic solvent | | Lower alcohol (Mixture of ethanol (boiling point: 79°C) and isopropyl alcohol (boiling point: 82°C)) | 56.8 | 52.6 | 52.7 | 52.4 | 52.2 | 51.7 | 52.6 | 52 6 |
| | | Ethvlene glycol monophenyl ether (boiling point: 245°C) | 3.0 | 3.0 | 3.0 | 3.0 | 3.0 | 3.0 | 3.0 | 3.0 |
| | | Benzyl alcohol (boiling point: 205°C) | | | | | | | | |
| Silica | (12) | Hydrophobic silica (average primary particle size 16nm, specific surface area 130m²/g) | | 0.1 | 0.03 | 0.3 | 0.5 | 1.0 | | |
| | (13) | Hydrophobic silica (average primary particle size 12nm, specific surface area 200m²/g) | | | | | | | 0.1 | |
| | (14) | Hydrophilic silica (average primary particle size 40nm, specific surface area 50m²/g) | | | | | | | | 0.1 |
| Phosphate ester-based surfactant having alkoxyethyl group (CₙH₂ₙ₊₁OCH₂CH₂O), alkoxy group (CₘH₂ₘ₊₁O) | (3) | Stearyl acid phosphate (m = 18) | | 1.0 | 1.0 | 1.0 | 1.0 | 1.0 | 1.0 | 1.0 |
| | (3) | Lauryl acid phosphate (m = 12) | 1.0 | | | | | | | |
| | (4) | Mixture of monoester of butoxyethyl acid phosphate (n = 4) and diester of butoxyethyl acid phosphate (n = 4) | | | | | | | | |
| | (5) | Phosphate ester-based surfactant (HLB: 8) | | | | | | | | |
| Silicone-based surfactant | (6) | Polyether-modified silicone (HLB: 6) | 0.2 | 0.3 | 0.3 | 0.3 | 0.3 | 0.3 | 0.3 | 0.3 |
| | (6) | Polyether-modified silicone (HLB: 9) | | | | | | | | |
| Organic amine | (7) | Polyoxyethylene alkylamine (total amine value: 254-265, tertiary amine) | | 2.0 | 2.0 | 2.0 | 2.0 | 2.0 | 2.0 | 2.0 |
| | (8) | Polyoxyethylene alkylamine (total amine value: 232-246, secondary amine) | 2.0 | | | | | | | |
| Resin | (9) | Terpene phenol resin (hydroxyl value: 160, softening point 125±5°C) | 27.0 | 31.0 | 31.0 | 31.0 | 310 | 31.0 | 31.0 | 31.0 |
| | (10) | Terpene phenol resin (hydroxyl value: 100, softening point 145±5°C) | | | | | | | | |
| | (11) | Styrene-acrylic resin (acid value: 240, mass average molecular weight 10000) | | | | | | | | |
| | (11) | Styrene-maleic acid resin (acid value: 190, mass average molecular wei4ht 12000) | | | | | | | | |
| | (11) | Acrylic resin (acid value: 80, mass average molecular weight 17000) | | | | | | | | |
| Sum total | | | 100.0 | 100.0 | 100.0 | 100.0 | 100.0 | 100.0 | 100.0 | 100.0 |
| Ink viscosity (mPa s) of oil-based ballpoint pen ink composition at 20°C and shear rate of 200sec⁻¹ | | | 20 | 30 | 30 | 30 | 30 | 30 | 30 | 30 |
| Ink consumption (mg) of ballpoint pen per100m | | | 170 | 140 | 140 | 140 | 140 | 125 | 140 | 140 |
| Ball diameter (mm) | | | 0.38 | 0.38 | 0.38 | 0.38 | 0.38 | 0.38 | 0.38 | 0.38 |
| A/B when A (mg) is ink consumption per 100m, and B (mm) is ball diameter | | | 447 | 368 | 368 | 368 | 368 | 329 | 368 | 368 |
| Arithmetic average roughness (Ra) of surface of ball (nm) | | | 1 | 1 | 1 | 1 | 1 | 1 | 1 | 1 |
| Movement amount of ball (µm) | | | 35 | 35 | 35 | 35 | 35 | 35 | 35 | 35 |
| Evaluation | Density of handwriting | | ⊚ | ⊚ | ⊚ | ⊚ | ⊚ | ○ | ⊚ | ⊚ |
| | Writing properties test 1 on non-permeable surface | | ⊚ | ⊚ | ⊚ | ⊚ | ⊚ | ⊚ | ⊚ | ⊚ |
| | Writing properties test 2 on non-permeable surface | | ⊚ | ⊚ | ⊚ | ⊚ | ⊚ | ⊚ | ⊚ | ⊚ |
| | Writing performance test | | ⊚ | ○ | ○ | ○ | ○ | ○ | ○ | ○ |
| | Writing feel | | ⊚ | ⊚ | ⊚ | ⊚ | ⊚ | ⊚ | ⊚ | ⊚ |
| | Weighted ink leakage suppression test | | | ⊚ | ○ | ⊚ | ⊚ | ⊚ | ⊚ | ⊚ |

**Table 5**

| Examples/Comparative Examples | | | Example 33 | | Comparative Example 1 | Comparative Example 2 | Comparative Example 3 | Comparative Example 4 | Comparative Example 5 | Comparative Example 6 |
|---|---|---|---|---|---|---|---|---|---|---|
| Colorant | (1) | Salt forming dye | | | 10.0 | 10.0 | 10.0 | 10.0 | 10.0 | 10.0 |
| | | Nigrosine dye | 10.0 | | | | | | | |
| | (2) | Gold-containing dye | | | | | | | | |
| | (2) | Pigment dispersion (Carbon black pigment content 20%, Polyvinyl butvral resins 16% contains, average particle size 150nm) | | | | | | | | |
| Organic solvent | | Lower alcohol (Mixture of ethanol (boiling point: 79°C) and isopropyl alcohol (boiling point: 82°C)) | 56.1 | | | 38.7 | 60.7 | 65.7 | 53.5 | 47.7 |
| | | Ethvlene glycol monophenyl ether (boilina point: 245°C) | 3.0 | | 68.7 | 3.0 | 3.0 | 3.0 | 3.0 | 3.0 |
| | | Benzyl alcohol (boiling point: 205°C) | | | | | | | | |
| Silica | (12) | Hydrophobic silica (average primary particle size 16nm, specific surface area 130m²/g) | 0.1 | | | | | | | |
| | (13) | Hydrophobic silica (average primary particle size 12nm, specific surface area 200m²/g) | | | | | | | | |
| | (14) | Hydrophilic silica (average primary particle size 40nm, specific surface area 50m²/g) | | | | | | | | |
| Phosphate ester-based surfactant having alkoxyethyl group (CₙH₂ₙ₊₁OCH₂CH₂O), alkoxy group (CₘH₂ₘ₊₁O) | (3) | Stearyl acid phosphate (m = 18) | 0.5 | | 1.0 | 1.0 | 1.0 | 1.0 | 1.0 | 1.0 |
| | (3) | Lauryl acid phosphate (m = 12) | | | | | | | | |
| | (4) | Mixture of monoester of butoxyethyl acid phosphate (n = 4) and diester of butoxyethyl acid phosphate (n = 4) | | | | | | | | |
| | (5) | Phosphate ester-based surfactant (HLB: 8) | | | | | | | | |
| Silicone-based surfactant | (6) | Polyether-modified silicone (HLB: 6) | 0.3 | | 0.3 | 0.3 | 0.3 | 0.3 | 0.5 | 0.3 |
| | (6) | Polyether-modified silicone (HLB: 9) | | | | | | | | |
| Organic amine | (7) | Polyoxyethylene alkylamine (total amine value: 254-265, tertiary amine) | 3.0 | | 2.0 | 2.0 | 2.0 | 2.0 | 1.0 | 3.0 |
| | (8) | Polyoxyethylene alkylamine (total amine value: 232-246, secondary amine) | | | | | | | | |
| Resin | (9) | Terpene phenol resin (hydroxyl value: 160, softening point 125±5°C) | 27.0 | | | 45.0 | 23.0 | 18.0 | 31.0 | 35.0 |
| | (10) | Terpene phenol resin (hydroxyl value: 100, softening point 145±5°C) | | | | | | | | |
| | (11) | Styrene-acrylic resin (acid value: 240, mass average molecular weight 10000) | | | | | | | | |
| | (11) | Styrene-maleic acid resin (acid value: 190, mass average molecular wei4ht 12000) | | | | | | | | |
| | (11) | Acrylic resin (acid value: 80, mass average molecular weight 17000) | | | 18.0 | | | | | |
| Sum total | | | 1000 | | 100.0 | 100.0 | 100.0 | 100.0 | 100.0 | 100.0 |
| Ink viscosity (mPa s) of oil-based ballpoint pen ink composition at 20°C and shear rate of 200sec⁻¹ | | | 20 | | 200 | 480 | 20 | 3 | 30 | 55 |
| Ink consumption (mg) of ballpoint pen per 100m | | | 170 | | 98 | 97 | 32 | 250 | 70 | 67 |
| Ball diameter (mm) | | | 0.38 | | 0.38 | 0.38 | 0.38 | 0.38 | 0.38 | 0.38 |
| A/B when A (mg) is ink consumption per 100m, and B (mm) is ball diameter | | | 447 | | 258 | 255 | 84 | 658 | 184 | 176 |
| Arithmetic average roughness (Ra) of surface of ball (nm) | | | 1 | | 1 | 1 | 1 | 1 | 3 | 1 |
| Movement amount of ball (µm) | | | 35 | | 35 | 35 | 15 | 35 | 25 | 25 |
| Evaluation | Density of handwriting | | ⊚ | | △ | △ | × | ⊚ | △ | × |
| | Writing properties test 1 on non-permeable surface | | ⊚ | | × | × | × | ⊚ | × | × |
| | Writing properties test 2 on non-permeable surface | | ⊚ | | × | × | × | × | × | × |
| | Writing performance test | | ⊚ | | △ | × | × | o | △ | × |
| | Writing feel | | ⊚ | | △ | △ | △ | ○ | ⊚ | △ |
| | Weighted ink leakage suppression test | | ⊚ | | | | | | | |

### Test and evaluation

Tests and evaluations were performed using the ballpoint pen 100 described with reference to FIGS. 1 and 2. Specifically, the oil-based ballpoint pen ink compositions (1.0 g) produced in Examples 1 to 33 and Comparative Examples 1 to 6 were stored in ink storage cylinders 2 (polypropylene). Then, a ballpoint pen tip 4 (movement amount in extending direction X: 35 µm, arithmetic average roughness (Ra) of surface of ball 3: 1 nm) rotatably holding a ball 3 having a ball diameter φ of 0.38 mm was attached to a ballpoint pen refill 1, and the ballpoint pen refill 1 was filled in the ink storage cylinder 2. By these treatments, an oil-based ballpoint pen 100 and a comparative ballpoint pen were produced.

As the ballpoint pen tip 4, a ballpoint pen tip 4 having a coil spring 5 that presses the ball 3 toward the inner wall of the tip T of the tip was used (see FIG. 2). The material of the ball 3 was a cemented carbide ball containing tungsten carbide as a main component (containing cobalt as a binder). The ball diameter, which is the diameter of the ball 3, and the arithmetic average roughness (Ra) of the surface of the ball 3 were as shown in Tables 1 to 5.

The following test was performed using the writing paper JIS P3201 as the writing test paper.

Using the oil-based ballpoint pens of Examples 1 to 33 and the comparative ballpoint pens, the ink consumption (mg) per a writing distance of 100 m was determined by the spiral writing test described above. As a result, the results shown in Tables 1 to 5 were obtained. In addition, the values of A/B where the ink consumption per a writing distance of 100 m is A (mg) and the diameter of the ball 3 is B (mm) are shown in Tables 1 to 5.

In addition, the movement amounts of the ball 3 in the extending direction X of the ballpoint pens 100, which is oil-based ballpoint pens of Examples 1 to 33, and the comparative ballpoint pens of Comparative Examples 1 to 6 were measured, and the results shown in the table were obtained. In the table, the "movement amount of the ball" is the movement amount of the ball 3 in the extending direction X.

The following evaluations were performed for the ballpoint pens 100 which are oil-based ballpoint pens of Examples 1 to 33 and the comparative ballpoint pens of Comparative Examples 1 to 6. As the writing test paper, the writing paper JIS P3201 was used in the same manner as described above.

Density of handwriting: A handwriting written by hand on the writing test paper made was visually evaluated.
· The handwriting is dense and sharp handwriting ···⊚
· The handwriting is dense. ··· ○
· The handwriting is dense enough for practical use. ... △
· The handwriting is faint. ···×

Writing properties test 1 on non-permeable surface: A handwriting written by hand on a sheet made of polyethylene terephthalate (PET) was visually evaluated.
· The writing line is good without repelling or light color. ···⊚
. The writing line has repelling and light color, but is practically usable. ··· ○
· The writing line has repelling and light color, and is a concern in practical use. ··· ×

Writing properties test 2 on non-permeable surface: A handwriting written by hand on a sheet made of polyethylene terephthalate (PET) was visually evaluated.
· It is good in handwriting blurring, excessive ink adhesion, and handwriting drying characteristics. ···⊚
· There are slight handwriting blurring, handwriting excessive ink adhesion, and handwriting drying characteristics, but there is no problem in practical use. ···○
· There are handwriting blurring, handwriting excessive ink adhesion, and handwriting drying characteristics, and practical concerns. ··· ×

Writing performance test: After handwritten writing on a writing test paper, the writing test paper was left for 24 hours in an environment of 20°C and 65% RH with the tip part exposed. Thereafter, writing was performed under the following writing conditions in the traveling test, and the length of the handwriting blurring in the writing was measured.

<Writing condition> Under the conditions of a writing load of 200 gf, a writing angle of 70°, and a writing speed of 4 m/min, linear writing was performed by the traveling tester, and evaluation was performed.
· The handwriting blurring has a length of 1 mm or more and less than 5 mm ··· ⊚
· The handwriting blurring has a length of 5 mm or more and less than 15 mm ··· ○
· The handwriting blurring has a length of 15 mm or more and less than 30 mm ... △
· The handwriting blurring has a length of 30 mm or more ··· ×

Writing feel: A sensory test by handwriting was performed and evaluated.
• Very smooth ··· ⊚
• Smooth ··· ○
• Slightly poor smoothness ··· △
• Heavy ··· ×

Furthermore, a pressurized ink leakage suppression test was performed for ballpoint pens 100 which are oil-based ballpoint pens of Examples 26 to 33 using an oil-based ballpoint pen ink composition containing silica.

Weighted ink leakage suppression test: A weight of 40 g was applied to the ballpoint pen 100, and a ballpoint pen tip 4 was made to protrude downward. Then, the ball 3 of the ballpoint pen tip 4 was kept in contact with the bottom part of a ballpoint pen display case, and allowed to stand in an environment of 20°C and 65% RH for 1 day to check ink leakage from the tip T of the tip.
· Ink leakage from tip T of the tip is hardly observed ··· ⊚
· Ink leakage from tip T of the tip is practically unnoticeable ···○
· Ink leakage from tip T of the tip is a practical problem ··· ×

In Examples 1 to 33, the density of the handwriting, the writing properties test 1 and the writing properties test 2 on the non-permeable surface, the writing performance test, the writing feel, and the weighted ink leakage suppression test showed good performance.

In addition, in the density of the handwriting, when comparing Example 13 to 16 (approximate formulation), Example 14 containing the nigrosine dye as the colorant had the densest handwriting.

The pigment dispersibility of the pigment ink of Example 16 was also practically acceptable.

In Comparative Example 1, since an organic solvent having a boiling point of 140°C or lower was not used, the handwriting drying characteristics was poor, and the evaluation results of the writing properties test 1 and the writing properties test 2 on the non-permeable surface were inferior to those of Examples.

Since Comparative Example 2 had a high ink viscosity, repelling and blurring occurred in the writing properties test 1 and the writing properties test 2 on the non-permeable surface, and the writing performance test was inferior to Examples.

In Comparative Example 3, since A/B < 100, the density of the handwriting was not sufficient, repelling and blurring occurred in the writing properties test 1 and the writing properties test 2, and the writing performance test was inferior to the example.

In Comparative Example 4, since A/B > 600, in the writing properties test 2 on the non-permeable surface, the handwriting drying characteristics was inferior to that in Example, and the excessive ink adhesion was inferior to that in Example.

In Comparative Examples 5 and 6, since the ink consumption per a writing distance of 100 m of the oil-based ballpoint pen was small, the density of the handwriting was not sufficient as compared with the Examples, and repelling and blurring occurred in the writing properties test 1 and the writing properties test 2.

In order to improve writing performance (handwriting blurring) and ink leakage suppression, the ballpoint pen tip 4 preferably includes a valve mechanism. The valve mechanism is a mechanism in which the ball 3 rotatably held by the tip T of the tip is pressed toward the inner wall of the tip end edge of the tip by the coil spring 5 directly or via the pressing body, and a gap is provided between the inner wall of the tip end edge of the tip and the ball 3 by the pressing force at the time of writing to allow the ink to flow out. It is preferable that the minute gap of the tip T of the tip is also closed by the valve mechanism when not in use.

In particular, in the case of using a retractable oil-based ballpoint pen (retractable ballpoint pen) such as a click-action oil-based ballpoint pen or a rotatably extended oil-based ballpoint pen, the writing performance and the ink leakage suppression performance are one of the most important performances, and thus are effective.

Further, in the present Example, as an oil-based ballpoint pen, the ballpoint pen 100 having the ballpoint pen refill 1 in which the oil-based ballpoint pen ink composition 10 is directly stored in the ink storage cylinder 2 is shown as an example. However, the oil-based ballpoint pen of the present invention may be a direct fill type ballpoint pen or an oil-based ballpoint pen in which the axial cylinder is the ink storage cylinder 2 and the oil-based ballpoint pen ink composition 10 is directly contained in the axial cylinder. Further, a structure in which the oil-based ballpoint pen ink composition 10 is stored in the ink storage cylinder 2 (ballpoint pen refill 1) is used as a ballpoint pen as it is may be adopted.

Further, in the present Example, for the sake of convenience, the ballpoint pen tip 4 in which the wire material is formed by cutting is exemplified, but the ballpoint pen tip 4 in which the pipe material is formed by pressing may be used.

### INDUSTRIAL APPLICABILITY

The present invention can be used as an oil-based ballpoint pen, and more specifically, can be widely used as an oil-based ballpoint pen of a cap type, a retractable type, or the like.

### EXPLANATIONS OF LETTERS OR NUMERALS

- 100: BALLPOINT PEN
- 10: OIL-BASED BALLPOINT PEN INK COMPOSITION
- 1: BALLPOINT PEN REFILL
- 2: INK STORAGE CYLINDER
- 3: BALL
- 4: BALLPOINT PEN TIP

## Claims

1. An oil-based ballpoint pen comprising: a ballpoint pen tip at a tip part of an ink storage cylinder; and an oil-based ballpoint pen ink composition stored in the ink storage cylinder, the composition containing a colorant, an organic solvent having a boiling point of 140°C or lower, a resin and a surfactant, wherein the oil-based ballpoint pen ink composition has an ink viscosity of 300 mPa·s or less at 20°C and a shear rate of 200 sec⁻¹, an ink consumption of the oil-based ballpoint pen per a writing distance of 100 m is 80 mg or more, and a ratio of a ball diameter B (mm) to an ink consumption A (mg) per a writing distance of 100 m satisfies 100 < A/B < 600.

2. The oil-based ballpoint pen according to claim 1, wherein
the surfactant comprises one kind or two or more kinds of surfactants selected from a phosphate ester-based surfactant, a silicone-based surfactant, a surfactant having an acetylene bond, a fluorine-based surfactant, a fatty acid, and a fatty acid ester.

3. The oil-based ballpoint pen according to claim 1 or 2, wherein
the resin comprises at least one kind of resin selected from a terpene phenol resin, a rosin resin, a styrene-maleic acid resin, a styrene-acrylic resin, and an acrylic resin.

4. The oil-based ballpoint pen according to claim 1 or 2, wherein
the surfactant has an HLB value of 12 or less.

5. The oil-based ballpoint pen according to claim 1, wherein
the oil-based ballpoint pen ink composition further contains an organic solvent having a boiling point of 160°C or higher.

6. The oil-based ballpoint pen according to claim 1, wherein
the oil-based ballpoint pen ink composition further contains silica.

7. The oil-based ballpoint pen according to claim 6, wherein
the silica has a specific surface area of 30 m²/g or more and 300 m²/g or less.

8. The oil-based ballpoint pen according to claim 1, wherein
a movement amount of a ball of the ballpoint pen tip in an extending direction of the ink storage cylinder is 10 µm or more and 50 µm or less.
